# EUROPÄISCHE PATENTSCHRIFT

(11) **EP 2 207 706 B1**
(45) Veröffentlichungstag und Bekanntmachung des Hinweises auf die Patenterteilung: **11.12.2013**
(21) Anmeldenummer: 08837444.2
(22) Anmeldetag: 05.10.2008
(51) Int. Cl.: B62B 7/12, B62B 7/14, B62B 9/10

(54) **MODULARES KINDERWAGEN-SITZ- UND -LIEGESYSTEM MIT AUFNAHMEVORRICHTUNG**
MODULAR STROLLER SEAT AND RECLINER SYSTEM HAVING A RECEPTACLE DEVICE
SYSTÈME MODULAIRE DE SIÈGE ET DE COUCHAGE DE POUSSETTE, AVEC DISPOSITIF RÉCEPTEUR

(30) Priorität: 05.10.2007 DE 102007047700
(43) Veröffentlichungstag der Anmeldung: 21.07.2010
(73) Patentinhaber: Lang, Viktor, 75210 Keltern (DE)
(72) Erfinder: Lang, Viktor, 75210 Keltern (DE)
(74) Vertreter: Reinhardt, Harry
(86) Internationale Anmeldenummer: PCT/EP2008/008407
(87) Internationale Veröffentlichungsnummer: WO 2009/046947

(56) Entgegenhaltungen:
- WO-A-2006/034615
- DE-U1- 8 326 705
- DE-U1-202005 019 191
- US-A- 4 265 481

## Beschreibung

Die Erfindung betrifft ein modulares Kinderwagen-Sitz- und -Liegesystem und insbesondere eine Aufnahmevorrichtung als Komponente desselben.

Kinderwagen sind in vielen Ausführungsformen beziehungsweise Bauformen bekannt. Sie können als Klappmodelle, Sport- oder Komfortmodelle ausgestaltet sein, über Sitze, Liegesitze oder Einsätze verfügen, die lediglich als Liegen oder Trageliegen geeignet sind. Auch Kombinationen von Sitzen, die sich als Liegen umfunktionieren lassen, sind bekannt. Ferner können auch Sitze oder Liegeeinsätze, gerade für Kinder verschiedener Altersstufen auf einem Kinderwagenfahrgestell ausgetauscht werden. Ein Liegeeinsatz selbst kann ebenfalls vielgestaltig sein, wobei er zumeist so gestaltet ist, dass das Kind damit schlafend aus dem Wagengestell genommen und getragen werden kann, also als Tragetasche. Ein Aufsatz, der für das Kind gedacht ist, das bereits sitzen kann, ist der so genannte "Sportsitz". Dieser ist vielfach weniger komfortabel, lässt sich mit steiler Lehne einstellen und kann bei Bedarf in einen Liegesitz umfunktioniert werden, so dass das Kind, wenn es während der Fahrt einschläft, in eine liegende Position gebracht werden kann. Das Umstellen von der Sitz- in die Liegeposition ist vielfach unkomfortabel, da die Rastvorrichtungen des Liege- und Sitzaufsatzes unter Gewichtsbelastung schwerer zu betätigen sind und außerdem vielfach unter einem Stoffüberzug liegen.

Grundsätzlich ist es bekannt, Fahrgestelle zusammenklappbar zu gestalten, damit das Fahrgestell mit abgenommenem Sitz- und/oder Liegeeinsatz Platz sparend transportiert oder verstaut werden kann, dabei wird insbesondere auf die Abmaße eines Kofferraums in Pkws abgestellt.

Aus der WO 2006/034615 A ist eine Aufnahmevorrichtung bekannt, die lösbar auf einem Kinderwagen anzuordnen ist und als Auflage für einen Kindersitz oder eine Liege vorgesehen ist. Die Aufnahmevorrichtung weist an gegenüberliegenden Seiten einer ersten Platte Griffelemente oder andere Elemente auf, an denen Profile um einen Drehpunkt drehbar angelenkt sind und über eine Feststellvorrichtung zur lösbaren Positionierung festlegbar sind. Mit zwei weiteren gegenüberliegenden Seiten der ersten Platte sind drehgelenkig eine zweite und eine dritte Platte verbunden. Die erste Platte stellt dabei ein Sitzflächenelement dar, die zweite Platte ein Rückenelement und die dritte Platte ein Element, dass als Beinauflage dienen kann. Über ein Verbindungselement sind die Platten miteinander gekoppelt, wobei ein Ende des Verbindungselementes mit der zweiten Platte gekoppelt ist und das andere Ende mit der dritten Platte.

Bekannt sind Kinderwagen, deren Seitenteile des Fahrgestells scherenartig gestaltet sind, wie etwa das in der EP 1 279 583 offenbarte. Diese scherenartigen Gestelle sind während der Benutzung verriegelt, so dass die Schere fixiert ist, und werden zum Zusammenklappen entriegelt. Jeweils eine Querstrebe, die die beiden zum Sitz weisenden Enden einer Schere verbindet, weist Rastmittel auf, die mit korrespondierenden, am Sitz oder der Tragetasche angeordneten Rastmitteln in Eingriff gebracht werden können, so dass eine sichere Anordnung des Sitzes, bzw. der Tragetasche, am Gestell gegeben ist. Das Positionieren des Sitzes bzw. der Tragetasche über den Rastmitteln der Querstrebe des Gestelles ist aufwändig, da beim Halten des Sitzes meist keine Sicht mehr auf alle Rastmittelpaare gegeben ist.

Zum Einsetzen der Sitze beziehungsweise Liegesitze sind unterschiedliche Mechanismen bekannt, damit der Sitz beziehungsweise Liegesitz während des Gebrauchs sicher mit dem Gestell gekoppelt werden kann und dennoch leicht vom Gestell trennbar ist.

Aus der DE 83 26 705 U ist ein verstellbarer Sitz mit daran angelenkten Fußteil und Rückenteil bekannt, die über Gelenkzüge miteinander in Verbindung stehen, wofür ein zusätzlicher Raumbedarf erforderlich ist.

Einen zusammenklappbaren Kinderwagen offenbart die DE 20 2004 019 178 U1, die einen Kinderwagen mit Klappgestell derart beschreibt, dass das Volumen des zusammengeklappten Fahrgestells gegenüber den bekannten Ausführungsformen noch verringert wird.

Ein umwandelbarer Sitz-Liegeeinsatz für Kinderwagen gemäß dem Oberbegriff von Anspruch 1 ist aus der DE 20 2005 019 191 U1 bekannt. Die Verstellbarkeit wird über Adapter, verstellbare Halter und Abhänger erreicht.

Weiteren Bezug auf die Ausgestaltung des Sitz- und Liegeeinsatzes für einen Kinderwagen nimmt die DE 20 2004 019 108 U1, die einen Sitz- und Liegeeinsatz für einen Kinderwagen beschreibt, der aus einer Polsterung und einem Bezug bestehenden Sitz- und Rückenbereich und zwei die seitlichen Begrenzungen bildenden Seitenteilen besteht. Der Sitzund Liegeeinsatz wird so gestaltet, dass die Handhabung vereinfacht wird und dass der Sitzund Rückenbereich des Sitz- und Liegeeinsatzes den unterschiedlichen Jahreszeiten angepasst werden kann. Diese Aufgabe wird gelöst, indem der Sitz- und Rückenbereich des Sitzund Liegeeinsatzes durch Verbindungselemente lösbar mit den Seitenteilen des Gestells des Kinderwagens verbunden ist.

Die DE 202 10 430 U1 beschreibt einen Kinderwagen mit einem Fahrgestell und mit einem in einem Stoffbezug vorliegenden Sitz- und Liegeeinsatz, dem Armlehnen zugeordnet sind, wobei der Stoffbezug ein aufrichtbares Rückenteil aufweist, so dass der Rand des Rückenteils aufrichtbar ist und damit das Kind während des Absenkens des Rückenteils gegen Herausfallen geschützt ist. Auf Grund der Klappmechanik und des Randstandes hat die Rückenlehne eine begrenzte Länge.

Ausgehend von diesem Stand der Technik liegt der vorliegenden Erfindung die Aufgabe zu Grunde, eine verbesserte Kinderwagen-Sitz- und -Liegevorrichtung zu schaffen. Diese Aufgabe wird durch eine Aufnahmevorrichtung mit den Merkmalen des Anspruchs 1 und durch ein modulares Kinderwagen-Sitz- und -Liegesystem mit den Merkmalen des Anspruchs 11 gelöst. Bevorzugte Ausführungsformen werden durch die Unteransprüche beschrieben.

Eine erste Ausführungsform bezieht sich auf die Aufnahmevorrichtung, die auf einem Kinderwagengestell derart angeordnet werden kann, dass eine Kindersitzauflage oder alternativ eine Liegeauflage darin aufgenommen werden können. Die Aufnahmevorrichtung umfasst eine Platte, an der zwei Elemente seitlich angeordnet sind, die zugleich als Griffe, jedoch auch als Bestandteil eines Verstellelements zum Verstellen der Aufnahmevorrichtung von einer sitzenden in eine Liegeposition dienen können. Die Griffe sind vorteilhaft geschickt seitlich angeordnet, so dass sie leicht der Bedienung zugänglich sind. Weitere Platten sind an der mit Griffen bestückten Platte angeordnet, so dass die Platten eine Zweigelenkkette bilden, die vorteilhaft eine flexible Basis der Aufnahmevorrichtung bereitstellt. Über ein Verbindungselement stehen alle Platten in operativer Verbindung, da ein Viergelenk, das aus dem Griffelement und zwei an den Griffelementen angeordneten Profilen sowie zwei verschiedenen Stellen des Verbindungselements mit einem Freiheitsgrad derart bereitgestellt ist, dass vorteilhaft das Drehen eines der Profile um seinen an dem Griffelement vorliegenden Drehpunkt ein synchrones Verstellen der Platten, die an die Platte mit den Griffen angelenkt sind, zur Folge hat. Ferner ist eines der an dem Griff angelenkten Profile mit einer Feststellvorrichtung ausgestattet, so dass die durch das Viergelenk eingestellte Konfiguration der Zweigelenkkette festgelegt werden kann.

Eine weitere Ausführungsform bezieht sich darauf, dass das Viergelenk mit der Zweigelenkkette aus Platten derart in operativer Verbindung steht, dass diese vorteilhaft in eine Vielzahl von Konfigurationen eingestellt werden kann, so dass sich eine Sitzanordnung mit aufrechter Sitzposition bis hin zu einer Liegeanordnung ergeben kann.

Dies kann, wie sich aus einer weiteren Ausführungsform ergibt, vorteilhaft kontinuierlich oder in diskreten Schritten durch die entsprechende Gestaltung der Feststellvorrichtung geschehen, welche das Viergelenk in der eingestellten Position hält. Damit ist es möglich, aus einer steilen Sitzposition die Aufnahmevorrichtung in eine Liegeposition zu bringen, ohne dass dies ruckartig oder in großen Stufen erfolgen würde. Stattdessen kann die den Rückenabschnitt bereitstellende Platte sanft nach hinten abgelassen werden. Dabei kann die Feststellvorrichtung als Drehknopf oder als Druckknopf ausgestaltet sein, Drehknopf oder Druckknopf sind entsprechend leicht handhabbar und gut zugänglich jeweils links und/oder rechts der Sitz- bzw. Liegeflächen des Kinderwagens außen an den Griffelementen angeordnet.

Die Platten, die die Zweigelenkkette bilden, können gemäß einer weiteren vorteilhaften Ausführungsformen voneinander unabhängige Geometrien aufweisen, so dass etwa die Platte, welche die Sitzfläche bereitstellt, vorteilhaft quadratisch sein kann, wohingegen eine den Rückenabschnitt bereit stellende Platte ein langes, schmales Rechteck, oder eine angenäherte Rechteckform mit Einbauchung oder eine weitere Form haben kann.

Schließlich bezieht sich eine Ausführungsform auf das Verbindungselement, welches die zweite Platte, die vorteilhaft ein Rückenabschnitt ist, über den Sitzflächenabschnitt mit der dritten Platte, welche eine Bein- oder Fußablage bereitstellt, verbindet. Das Verbindungselement nimmt insofern vorteilhaft Zugkräfte auf, so dass über die Betätigung des Viergelenks die synchrone Verstellung der Platten erfolgen kann. Eine Betätigung des als "Zugelement" ausgestalteten Verbindungselements erleichtert bei entsprechender Einstellung des Viergelenks auch ein rasches Zusammenfallen bzw. Zusammenklappen der Platten zueinander, so dass die Aufnahmevorrichtung leicht für den Transport zusammenzufalten ist. Geeigneter Weise kann daher das Verbindungselement ein Seil oder eine Litze sein.

Eine weitere Ausführungsform bezieht sich auf ein modulares Kinderwagensitzund -liegesystem, welches die erfindungsgemäße Aufnahmevorrichtung zusammen mit einer Kindersitz- und alternativ einer Kinderliegeauflage umfasst. Dabei sind die Kindersitzauflage, respektive die Kinderliegeauflage in ihrer Geometrie derart gestaltet, dass sie geeignet sind, in die Aufnahmevorrichtung eingelegt zu werden. Vorteilhaft weist eine Kindersitzauflage dabei eine Sitzflächenplatte auf, die mit einem Rückenlehnenelement ebenfalls drehgelenkig verbunden ist, wobei das Rückenlehnenelement an seinem von dem drehgelenkig verbundenen Ende abgewandten Ende einen als Umgriff ausgebildeten Rand aufweist, der mit dem Rückenabschnitt der Aufnahmevorrichtung in Eingriff gebracht werden kann. Damit kann die Kindersitzauflage leicht durch Einhängen mit der Aufnahmevorrichtung sicher verbunden werden. Vorteilhaft ist darüber hinaus, dass durch die Kombination des Rückenabschnitts der Aufnahmevorrichtung und des Rückenlehnenelements der Kindersitzauflage eine stabile, besonders lange Rückenlehne für den Kinderrücken bereitgestellt wird.

Weitere Ausführungsformen beziehen sich darauf, dass die Kindersitzauflage gepolstert sein kann und dass die Polsterung ferner mit einem textilen Überzug versehen werden kann.

Schließlich ist noch eine weitere Ausführungsform auf eine Säuglingstragetasche als Teil des modularen Kinderwagensitz- und -Liegesystems gerichtet, wobei die Aufnahmevorrichtung derart einstellbar ist, dass die erste, zweite und dritte Platte eine horizontale Fläche bilden, auf die eine Säuglingstragetasche gestellt werden kann, die vorteilhaft durch die Seitenflügel, welche an der Aufnahmevorrichtung bereitgestellt sind, gesichert werden kann.

Weitere Ausführungsbeispiele beziehen sich darauf, dass sowohl die Kindersitzauflage als auch eine Kinderliegeauflage mit entsprechenden Festlegungsvorrichtungen verbunden sein können, die vorteilhaft durch Druckknöpfe oder Klettverschlusselemente bereitgestellt werden und die mit jeweils an entsprechenden geeigneten Stellen bereitgestellten korrespondierenden Festlegungselementen bewirken, dass der Kinderwagensitz oder die Kinderliegeauflage in der Aufnahmevorrichtung sicher und rutschfest gehalten wird. Besonders vorteilhaft ist hierbei, dass durch wenige Handgriffe, wie das Lösen der Festlegungsvorrichtung, also etwa eines Druckknopfes, und die Betätigung der Festlegungsvorrichtung an dem Viergelenk, die Positionen der Aufnahmevorrichtung rasch verändert werden können, so dass das Kinderwagengestell von Aufnahmevorrichtung und Kindersitzauflage oder Kinderliegeauflage leicht getrennt werden kann, etwa um diese umzustellen oder um sie zu transportieren.

### KURZE BESCHREIBUNG DER FIGUREN

Weitere bevorzugte Ausgestaltungen, sowie einige der Vorteile, die mit diesen und weiteren Ausgestaltungen verbunden sind, werden durch die nachfolgende ausführliche Beschreibung deutlich und besser verständlich. Die Beschreibung wird dabei durch die Figuren gestützt, in denen Gegenstände oder Teile derselben, die im Wesentlichen gleich oder sehr ähnlich sind, mit denselben Bezugszeichen versehen sein können.

**Figur 1** zeigt eine Explosionsansicht einer Kindersitzauflage, der erfindungsgemäßen Aufnahmevorrichtung und eines Kinderwagengestells,

**Figur 2** zeigt die erfindungsgemäße Aufnahmevorrichtung, versehen mit einem Kindersitz, angeordnet auf dem Kinderwagengestell in einer Seitenansicht,

**Figur 3** zeigt eine Seitenansicht des von der erfindungsgemäßen Aufnahmevorrichtung aufgenommenen Kindersitzes in Liegeposition,

**Figur 4** zeigt eine perspektivische Ansicht der erfindungsgemäßen Aufnahmevorrichtung, angeordnet auf einem Kinderwagengestell und versehen mit einer Säuglingstragetasche und entsprechendem Schutzhimmel,

**Figur 5** zeigt eine Seitenansicht der erfindungsgemäßen Aufnahmevorrichtung, angeordnet auf einem Buggy-Kinderwagengestell, in Sitzposition.

### BESCHREIBUNG BEVORZUGTER AUFÜHRUNGSBEISPIELE

Die hier verwendete Terminologie wird zum Zweck der Beschreibung verschiedener Ausführungsformen gewählt. Nachfolgend werden daher Begriffe hinsichtlich ihrer Bedeutung für die vorliegende Erfindung definiert.

So ist unter einem "Kinderwagengestell" jedwedes geeignete Kinderwagengestell, sei es ein sogenanntes Sportkinderwagengestell oder ein Buggy-Kinderwagengestell oder ein anderes geeignetes Kinderwagengestell, zu verstehen. Unter einer "Kindersitzauflage" ist nachfolgend jene Auflage zu verstehen, die aus Bequemlichkeits- und Sicherheitsgründen für das Kind auf die Aufnahmevorrichtung montiert wird, damit das Kind in sitzender oder liegender Position bequem gehalten wird. Dabei kann die Aufpolsterung der Kindersitzauflage unterschiedlich dick sein, sie kann wenige Millimeter bis hin zu einigen Zentimetern umfassen, von einer Polsterung nur im Sitz- und Rückenbereich bis hin zu bequemen Seitenauspolsterungen sind alle Ausgestaltungen der Kindersitzauflage möglich.

Unter einer "trapezförmigen" Platte wird nachfolgend das mathematische Trapez verstanden, bei welchem es sich um ein Viereck handelt, das zwei parallele Seiten aufweist. Üblicherweise wird mit der trapezförmigen Platte ein symmetrisches Trapez gemeint sein, aber auch Quadrate und Rechtecke sind mathematisch gesehen Trapeze. Eine "näherungsweise trapezförmige" kann somit eine solche Platte sein, deren Seiten durchaus Einbauchungen oder Ausbauchungen aufweisen können.

Die "Platte" als solche kann jedes flächige oder näherungsweise flächige Element sein, das durchaus nicht vollflächig geschlossen sein muss. So wird hierunter insbesondere auch eine Platte mit einer oder mehreren zentralen Aussparungen verstanden, also eine Platte, deren Erscheinung einem Rahmen nahe kommt oder die ein Rahmen ist. Die "Platte" kann auch in sich flexibel ausgebildet sein. Ferner umfasst eine "näherungsweise flächige Platte" auch Platten, die Wölbungen, Erhebungen oder Vertiefungen aufweisen, also beispielsweise eine ergonomische Ausformung.

Ein "Viergelenk" meint nachfolgend eine drehgelenkige Anordnung von vier miteinander in Verbindung stehenden Punkten, die ein Gelenk mit einem Freiheitsgrad bilden. Die Drehung um einen Gelenkpunkt bewirkt die Verschiebung von zumindest zwei Gelenkpunkten.

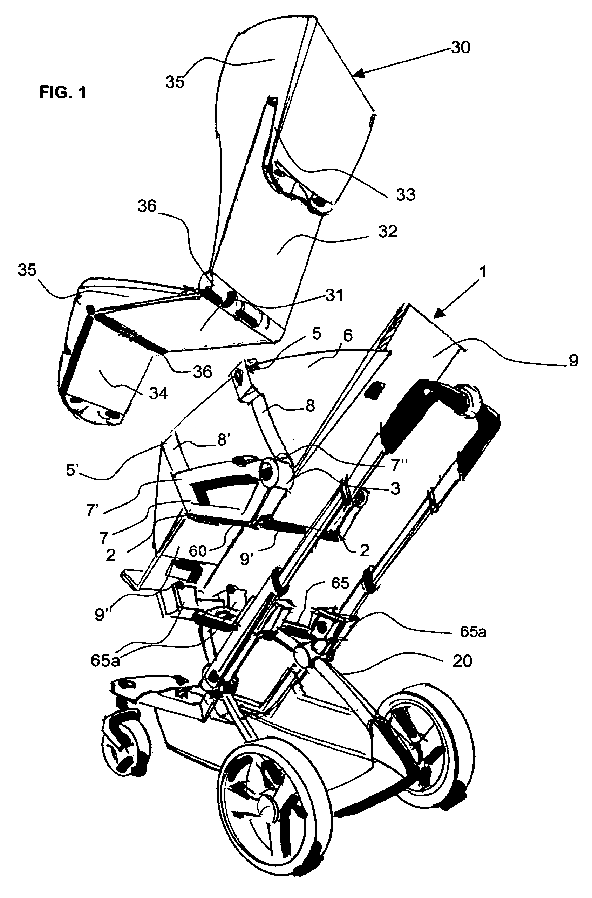

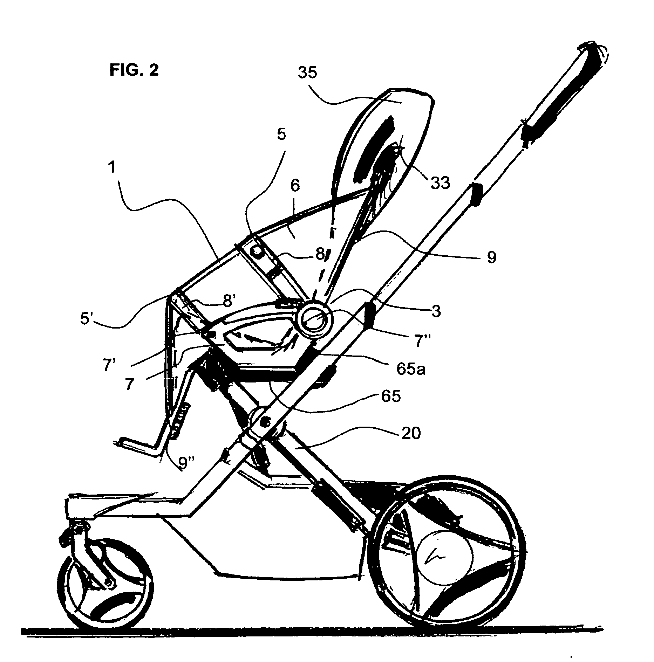

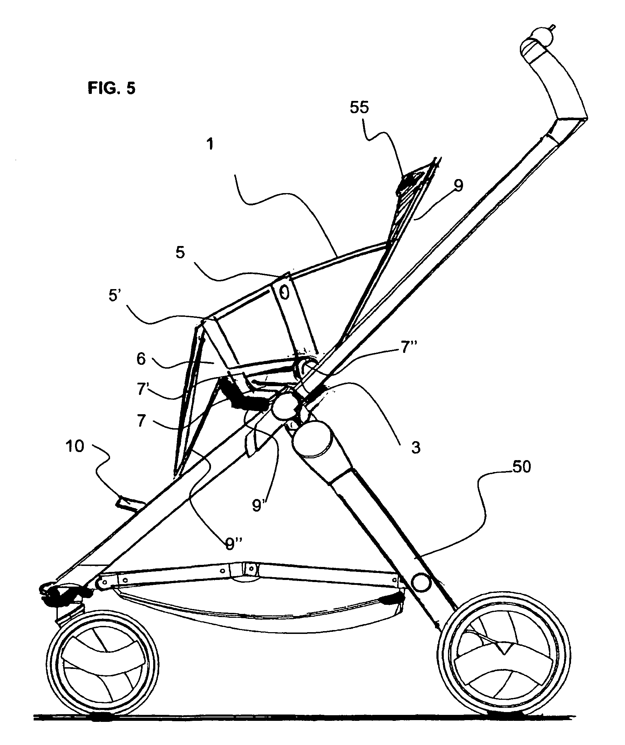

Alle Figuren 1 bis 5 zeigen die erfindungsgemäße Aufnahmevorrichtung 1. Aus Figuren 2 bis 5 wird ersichtlich, wie die Aufnahmevorrichtung 1 in montiertem Zustand auf einem Kinderwagengestell 20 für einen Sportkinderwagen, wie in Figuren 2 bis 4 oder einem ein Buggy-Kinderwagengestell 50 wie in Figur 5, angeordnet werden kann. Figur 1 verdeutlicht den Aufbau des modularen Kinderwagen-Sitz- und -Liegesystems, hier mit einer Kindersitzauflage 30 über einem Kinderwagengestell 20 des Typs "Sportkinderwagen" in abgehobener Ansicht.

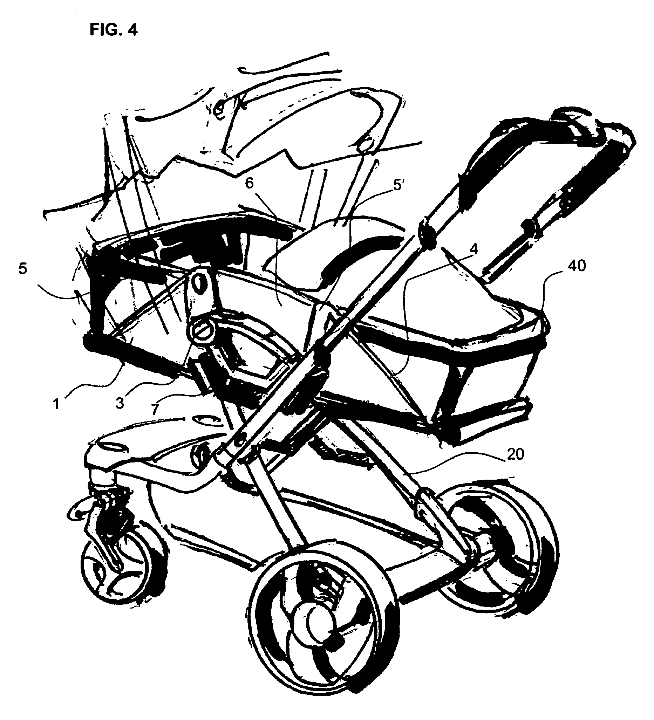

Figur 1 verdeutlicht insofern, dass die Aufnahmevorrichtung 1 geeignet ist, lösbar auf einem Kinderwagengestell 20 angeordnet zu werden, um eine Kindersitzauflage 30 aufzunehmen. Alternativ kann, wie in Figur 4 gezeigt, auch eine Liegeauflage, in Figur 4 eine Säuglingstragetasche 40, in die Aufnahmevorrichtung 1 gelegt werden.

Grundsätzlich umfasst die Aufnahmevorrichtung 1 zwei Griffelemente 7, die an gegenüberliegenden Seiten einer ersten Platte angeordnet sind, die hier durch den Sitzflächenabschnitt 9' repräsentiert wird. Eine zweite Platte 9, die den Rückenabschnitt 9 bereitstellt, ist mit einer weiteren Seite der ersten Platte über das Drehgelenk 2 drehgelenkig verbunden, schließlich ist eine dritte Platte gegenüberliegend der zweiten Platte als Bein- und Fußablage 9" ebenfalls über ein Drehgelenk 2 gelenkig mit der letzten freien Seite des Sitzflächenabschnitts 9' verbunden. Ein Verbindungselement, welches vorliegend durch einen Rand 4 eines Seitenflügels 6 bereitgestellt wird, verbindet den Rückenabschnitt 9 mit der Bein- und Fußablage 9". Indem das eine Ende des Verbindungselements mit der Bein- und Fußablage 9" gekoppelt ist und das zweite Ende des Verbindungselements mit dem Rückenabschnitt 9 verbunden ist, kann durch Ausübung eines Zugs auf das eine Ende des Verbindungselements eine Wirkung auf die am anderen Ende des Verbindungselements befindliche Platte ausgeübt werden. Ferner ist ein erstes Profil 8 an einem Drehpunkt 7' des Griffelements 7 drehbar angelenkt, beabstandet dazu ist ein zweites Profil 8' ebenfalls an einem zweiten Drehpunkt 7" des Griffelements 7 drehbar angelenkt, wobei die von dem Griffelement 7 abgewandten Enden des ersten und des zweiten Profils 8,8' mit einer ersten Stelle 5 des Verbindungselements beziehungsweise mit einer zweiten Stelle 5' des Verbindungselements derart gekoppelt sind, dass der erste Drehpunkt 7' mit dem zweiten Drehpunkt 7" und den beiden Stellen 5und 5' ein Viergelenk ausbilden. Vorliegend ist das erste Profil 8 so gestaltet, dass es den Rand 4 des Seitenflügels 6 entsprechend umgreift und durch eine Niete mit dem Seitenflügelmaterial, das aus einer Textilie oder auch aus Kunststoff bestehen kann, drehbar verbunden ist. Das zweite Profil 8' umgreift den Rand 4 nicht, sondern ist mit diesem lediglich durch eine Niete fest verbunden. Selbstverständlich sind auch andere Möglichkeiten denkbar, die Enden der Profile jeweils mit dem Verbindungselement zu koppeln.

Ferner weist die erfindungsgemäße Aufnahmevorrichtung 1 eine Feststellvorrichtung auf, die an dem ersten Drehpunkt 7', an dem das erste Profil 8 mit dem Griffelement 7 drehgelenkig verbunden ist, angeordnet ist. Dies dient vorteilhaft dazu, dass das erste Profil 8 an dem Drehgelenk 7' des Griffelements 7 in einer Ebene gedreht und in eine gewünschte Position gebracht werden kann, in welcher es dann durch Feststellen festgelegt wird. Als Feststellvorrichtung kann letztlich jedes Element dienen, welches über ein Einrastelement verfügt, das mit einem an dem Profil 8 angeordneten korrespondierenden Einrastelement in Eingriff steht.

Die Figuren zeigen als Feststellvorrichtung einen Drehknopf 3, der durch Drehen derart betätigt werden kann, dass die Einrastelemente in verschiedene Positionen gebracht werden und somit die Feststellvorrichtung in diskreten Einrastschritten betätigt wird. Es ist denkbar, lediglich eines der beiden Griffelemente 7 an einer Aufnahmevorrichtung mit einer Feststellvorrichtung zu versehen. Selbstverständlich sind auch Feststellvorrichtungen möglich, die kontinuierlich betätigt werden können.

Das bereitgestellte Viergelenk dient grundsätzlich dazu, dass die Platten, welche den Rückenabschnitt 9, den Sitzflächenabschnitt 9' und die Bein- und Fußablage 9" bereitstellen, durch Drehen eines Gliedes, respektive des ersten Profils 8, über den Drehknopf 3 in eine Vielzahl von Positionen von einer Sitzanordnung mit steil gestellter Rückenlehne bis hin zu einer Liegeanordnung eingestellt werden können. Vorteilhaft an der Viergelenkanordnung ist, dass die Betätigung lediglich über den Drehknopf 3 und somit die Positionsveränderung lediglich des ersten Profils 8 über den vorliegenden einen Freiheitsgrad des Viergelenks bewirkt wird, dass auch das zweite Profil 8" bewegt wird, und mit ihm Zug und ggf. Druck auf das Verbindungselement ausgeübt wird. Dies erfordert, dass das Verbindungselement, welches vorliegend in allen Figuren als ein Rand 4 eines Seitenflügels 6 bereitgestellt wird, aus einem Material geschaffen ist, welches geeignet ist, Zugkräfte aufzunehmen. Eine Ausgestaltung des Verbindungselements, das die Aufnahme von Druckkräften erlaubt, kann aus Stabilitätsgründen erwünscht sein.

Ein solches Element kann entsprechend ein Seil, eine Litze, oder - zur Aufnahme auch von Druckkräften - ein Flachprofil, ein Stab, insbesondere ein flexibler Stab, oder auch ein Schlauchmaterial aus einem Kunststoff, einem Naturgummi, einer Metallverbindung, aus Teflon, aus Fischgrat oder anderen Materialien sein, die eine geeignete Steifigkeit bei gewünschter Flexibilität aufweisen. Ein solches Element kann etwa in einen Hohlsaum eines aus textilem oder Kunststoffmaterial beschaffenen Seitenflügels 6 eingeführt werden, so dass durch eine entsprechend beschaffene Kante der Profile 8,8' der Rand 4 durch Festklemmen in einen als Klammer ausgebildeten Rand der Profile 8,8' aufgenommen werden kann.

Selbstverständlich kann ein Profil auch auf andere Weise mit dem Rand des Seitenflügels oder gegebenenfalls mit einem alternativen Verbindungselement gekoppelt sein, wenn etwa das Verbindungselement entkoppelt von dem Seitenflügel dargestellt ist. Dann kommt dem Rand des Seitenflügels nicht die Funktion des Verbindens der Platten der Aufnahmevorrichtung zu; diese Aufgabe wird dann über das Verbindungselement wahrgenommen, das eventuell wenige Zentimeter beabstandet von dem Seitenflügel oberhalb desselben angeordnet ist.

Lediglich durch Betätigung des Druckknopfs 3 werden somit die beiden Flachprofile und mit ihnen der Rand 4 des Seitenflügels 6 in ihrer Bewegungsebene gedreht, wodurch ein synchrones Verstellen des Rückenabschnitts 9 und der Bein- und Fußablage 9" bewirkt wird, während der Sitzflächenabschnitt 9' immobil bleibt. Nicht dargestellt ist, dass die Platten, welche den Rückenabschnitt 9, den Sitzflächenabschnitt 9' sowie die Bein- und Fußablage 9" bereitstellen, verschiedene trapezförmige oder näherungsweise trapezförmige Geometrien aufweisen können. So kann sich etwa die Form der Sitzfläche 9' vom Gesäß zu den Knien weisend verjüngen, oder der Rückenabschnitt 9 kann sich vom Gesäß zum Kopf hinweisend ebenfalls verjüngen, so dass beide Platten symmetrische Trapeze ausbilden würden. Wie in Figur 1 gezeigt, kann die dritte Platte an sich die Bein- und Fußablage 9" bereitstellen, es können jedoch auch weitere Platten oder Winkel an der dritten Platte 9" angeordnet sein, so dass zum Anstellen der Füße etwa eine kleine Kante 10 bereitgestellt wird. Der Seitenflügel 6 ist vorliegend so angeordnet, dass er entlang eines großen Teils des Rückenabschnitts 9, entlang des Sitzflächenabschnitts 9' und entlang eines großen Abschnitts der Bein- und Fußablage 9" verläuft.

Selbstverständlich könnte ein Seitenflügel auch entsprechend kürzer sein, es sollte jedoch gewährleistet sein, dass, wenn der Seitenflügel das Verbindungselement bereitstellt, das zum Heben und Senken der Platten in Sitz- und Liegeposition erforderlich ist, das Verbindungselement derart mit den Platten verbunden ist, dass die Betätigung des Viergelenks dennoch sicher zu einer Veränderung der Plattenpositionen zueinander führt, so dass die gewünschte Sitz- oder Liegeposition eingestellt werden kann.

Das Material des Seitenflügels, das sich aus den Figuren nicht erschließt, kann ein blickdichtes festes textiles Material sein, es kann sich jedoch ebenfalls um ein Klarsichtmaterial aus Kunststoff oder um ein Netzmaterial handeln. Maßgeblich für die Auswahl des Materials ist unter anderem die Sicherheit des Kindes, die durch die Führung, die durch die Seitenflügel bereitgestellt wird, verbessert wird. Das Kind sollte zusätzlich sicher in einer Position in einer erfindungsgemäßen Kindersitzauflage gehalten werden, was insbesondere auch durch ein elastisches Material unterstützt wird.

Schließlich wird der Seitenflügel 6, wie in den Figuren 1 bis 5 dargestellt, ermöglichen, dass eine in die Aufnahmevorrichtung 1 eingelegte Kindersitzauflage 30, 55 seitlich begrenzt und somit vor Rutschen und seitlichem Kippen bewahrt wird. Nicht nur das Kind wird durch die bereitgestellten Seitenflügel 6 vorteilhaft geführt und gehalten; auch das Verlieren von mitgeführten Gegenständen, vom Schnuller bis zum Teddybär, wird verhindert, oder die Gefahr des Verlierens wird zumindest verringert.

Figur 1 verdeutlicht auch, dass vorliegend ein modulares Kinderwagensitz- und - liegesystem bereitgestellt wird. Es kann aus unterschiedlich beschaffenen und gepolsterten Kindersitz- und /oder -Liegeauflagen bestehen und umfasst die erfindungsgemäße Aufnahmevorrichtung.

Figur 1 zeigt die erfindungsgemäße Aufnahmevorrichtung 1 in Kombination mit einer Kindersitzauflage 30, die so ausgestaltet ist, dass sie bequem in der Aufnahmevorrichtung 1 aufgenommen werden kann. Die Kindersitzauflage 30 weist eine Sitzflächenplatte 31 auf, die mit einem Rückenlehnenelement 32 drehgelenkig über das Gelenk 36 verbunden ist.

Das Rückenlehnenelement 32 hat überdies an seinem von dem drehgelenkig gekoppelten Ende abgewandten Ende einen als Umgriff 33 ausgebildeten Rand. Dieser Rand ist so beschaffen, dass er den Rückenabschnitt 9 der Aufnahmevorrichtung 1 umgreift, wodurch ermöglicht wird, dass die Kindersitzauflage 30 in die Aufnahmevorrichtung 1 nicht nur aufgenommen, sondern eingehängt und zusätzlich gesichert werden kann. Ein weiterer Vorteil, der sich hierdurch ergibt, ist der, dass der durch den Umgriff 33 ausgebildete Rand zusammen mit dem umgriffenen Rückenabschnitt 9 eine Rückenlehne von vorteilhafter Länge, nämlich von 51cm, bereitstellt. Natürlich kann die gesamte sich ergebende Rückenlehne auch kürzer oder länger, nämlich z. B. bis zu 55 cm, sein, wodurch der Entwicklung Rechnung getragen wird, dass Kinder heute in sehr jungem Alter größer sind, als dies durchschnittlich bei demselben Alter vor Jahren noch der Fall war. In Kombination mit dem vorliegend gezeigten Kinderwagengestell 20, das über einen geeigneten Radstand verfügt, lässt sich die Rückenlehne bis zu der Länge von 65 cm ausführen, ohne dass die Handhabung des Kinderwagens beeinträchtigt würde. Damit können auch größere Kinder gefahrlos und bequem in dem Kinderwagen transportiert werden und der Kopf des Kindes kann sicher auf der dafür vorgesehenen Auflage des Kindersitzes aufgenommen werden.

Die Kindersitzauflage 30 ist vorliegend mit einem Beinablageelement 34 ausgestattet, welches ebenfalls mit der Sitzflächenplatte 31 drehgelenkig über ein Gelenk 36 verbunden ist. Damit kommen die Drehgelenke 36 der Kindersitzauflage 30 quasi über den Drehgelenken 2 der Aufnahmevorrichtung 1 zu liegen und, da die Drehgelenke 36 der Kindersitzauflage 30 nicht festgestellt sind, sondern sich der Unterlage anpassen, formt die Kindersitzauflage 30 bei Verstellen der Aufnahmevorrichtung 1 entsprechend die Sitzposition oder eine Liegeposition nach. Damit wird vorteilhaft erreicht, dass das Kind in einem bequemen sicheren Sitz mit schützender Seitenbegrenzung aufgenommen werden kann und dass durch leichte und geschickte Handhabung, nämlich durch die Betätigung des Drehknopfs 3 von außen, die Sitzposition in eine Liegeposition verändert werden kann, ohne dass das Kind geschüttelt oder gar geweckt wird. Derjenige, der den Kinderwagen schiebt, findet den Dreh- oder auch Druckknopf 3, der als Feststellvorrichtung und auch als Verstellvorrichtung des Viergelenks vorgesehen ist, leicht und geschickt von außen zugänglich angeordnet, ohne dass er von Textilbahnen überlappt wird und die Sicht darauf verdecken würden. Damit ist es nicht länger erforderlich, nach einer Verstellvorrichtung unter dem Stoff zu suchen und eine Verstellung in großen Stufen unter hohem Kraftaufwand zu bewirken.

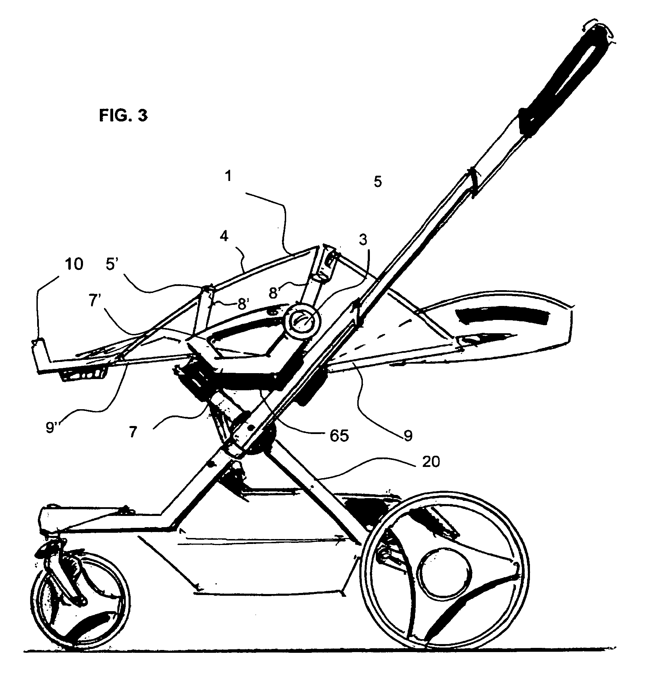

Wie darüber hinaus in Figuren 1 und 3 zu sehen ist, kann die Kindersitzauflage 30 vorteilhaft im Bereich der Sitzflächenplatte 31 und des Rückenlehnenelements 32 mit einem Polster versehen sein. Dieses Polster hat vorliegend eine erhebliche Dicke und ist darüber hinaus mit einem schützenden Textilüberzug versehen. Die Kindersitzauflage 55, die in Figur 5 zu sehen ist, weist hingegen nur ein relativ sparsames, dünnes Polster auf, da der gezeigte Buggy oder Reisekinderwagen zweckbestimmt mit weniger Komfort ausgestattet ist. Die Kindersitzauflage 55 kann aus einer weichen, dünnen Polsterauflage bestehen. Dennoch wird auch hier gerade durch das Bereitstellen der Seitenflügel 6 eine erhöhte Sicherheit für das sitzende oder liegende Kind ermöglicht.

Die erfindungsgemäße Aufnahmevorrichtung 1 weist Rastelemente 60 auf, die geeignet sind, mit entsprechenden an einem Kinderwagengestell 20, 50 angebrachten Rastmitteln 65 in Eingriff gebracht zu werden. Damit kann die Aufnahmevorrichtung 1 schnell und auf leichte Weise sicher auf dem Gestell angeordnet und ebenso schnell wieder aus diesem gelöst werden. Im Ausführungsbeispiel ist in Fig. 5 die Form der Anformungen 65a der Rastmittel 65 zu erkennen, die am Kinderwagengestell 20 vorgesehen sind. Es handelt sich hier um vier in Fahrtrichtung schräg nach oben weisende Elemente, die auf beiden Seiten des Gestells ein V-förmiges Element bilden. Wird die Aufnahmevorrichtung mit ihren gegengleichen Rastmitteln 60 auf diese Rastmittel aufgesetzt, führt die V-Form zu einem selbsttätigen Zentrieren der Aufnahmevorrichtung 1 am Kinderwagengestell 20, wobei die Zentrierung durch die Muldenform weiter erleichtert wird. Anstelle der vier Anformungen können auch nur zwei Elemente vorgesehen sein und auch auf die Muldenform kann verzichtet werden.

Vorteilhaft muss die erfindungsgemäße Aufnahmevorrichtung 1 nicht aus dem Kinderwagengestell 20, 50 entfernt werden, wenn die Kindersitzauflage 30 gegen eine Liegeauflage ausgetauscht werden soll. Eine solche Liegeauflage wird etwa durch eine Säuglingstragetasche 40, wie gezeigt in Figur 4, repräsentiert. Um die Säuglingstragetasche 40 sicher auf der Aufnahmevorrichtung 1 anordnen zu können, wird lediglich durch Drehen des Drehknopfs 3 an dem Viergelenk bewirkt, dass die Platten, welche den Rückenabschnitt 9, den Sitzflächenabschnitt 9' und die Bein- und Fußablage 9" definieren, in einer Ebene, respektive der horizontalen, angeordnet werden. Dann kann die Säuglingstragetasche 40 in der Aufnahmevorrichtung 1 und auf der darin vorteilhaft bereitgestellten Ebene abgelegt und an dieser gesichert werden.

Um eine entsprechende Sicherung vorzunehmen, kann die Kindersitzauflage oder alternativ die Kinderliegeauflage, respektive die Tragetasche, in allen Ausführungsformen eine entsprechende Vorrichtung zur Festlegung in bzw. an der Aufnahmevorrichtung aufweisen. Eine solche Vorrichtung kann durch ein Druckknopfsystem oder durch ein Klettsystem bereitgestellt werden; beides ist figurativ nicht gezeigt, dem Fachmann jedoch sowohl bezüglich der Ausgestaltungen als auch bezüglich der Anordnungsmöglichkeiten bekannt. Es können von entsprechenden Druckknopfpaaren die weiblichen Teile an der Kindersitzauflage oder etwa an der Säuglingstragetasche angeordnet werden, während die korrespondierenden männlichen Teile an der Aufnahmevorrichtung in entsprechender Position angeordnet sind. Durch leichtes Einknöpfen oder Verkletten kann damit die Kindersitzauflage, respektive die Säuglingstragetasche, derart in der Aufnahmevorrichtung angeordnet werden, dass sie gegen Rutschen gesichert ist.

### Bezugszeichenliste

- 1: Aufnahmevorrichtung
- 2: Drehgelenke an der Aufnahmevorrichtung
- 3: Drehknopf
- 4: Rand eines Seitenflügels
- 5, 5': Erste, zweite Stelle des Verbindungselements
- 6: Seitenflügel
- 7: Griffelement
- 7', 7": Erster, zweiter Drehpunkt
- 8, 8': Erstes, zweites Profil
- 9: Rückenabschnitt
- 9': Sitzflächenabschnitt
- 9": Bein- und Fußablage
- 10: Kante zum Fußanstellen
- 20: Kinderwagengestell
- 30: Kindersitzauflage
- 31: Sitzflächenplatte
- 32: Rückenlehnenelement
- 33: Umgriff
- 34: Beinablageelement
- 35: Polsterauflage
- 36: Drehgelenk an der Kindersitzauflage
- 40: Säuglingstragetasche
- 50: Buggy-Kinderwagengestell
- 55: Kindersitzauflage
- 60: Rastmittel
- 65: Rastmittel an 20
- 65a: Anformung

## Patentansprüche

1. Aufnahmevorrichtung (1), die geeignet ist, lösbar auf einem Kinderwagengestell (20,50) angeordnet zu werden und eine Kindersitzauflage (30) und/oder eine Liegeauflage aufzunehmen, umfassend
- zwei Griffelemente (7) oder Elemente, die an gegenüberliegenden Seiten einer ersten Platte angeordnet sind,
- eine zweite und eine dritte Platte, die mit zwei weiteren gegenüberliegenden Seiten der ersten Platte drehgelenkig verbunden sind,
- ein Verbindungselement mit einem ersten Ende und einem zweiten Ende, wobei das erste Ende mit der zweiten Platte gekoppelt ist und das zweite Ende mit der dritten Platte gekoppelt ist,
- ein erstes Profil (8), das an einem ersten Drehpunkt (7') des Griffelements (7) oder des Elements drehbar angelenkt ist,
- ein zweites Profil (8') das an einem zweiten Drehpunkt (7") des Griffelements (7) oder des Elements drehbar angelenkt ist,
wobei zumindest eines der ersten und der zweiten Profile (8,8') an zumindest einem der Griffelemente (7) oder Elemente mit einer Feststellvorrichtung zur lösbaren Positionierung an dem Griffelement (7) oder dem Element gekoppelt ist,
**dadurch gekennzeichnet, dass** ein von dem Griffelement (7) oder dem Element abgewandtes Ende des ersten Profils (8) mit einer ersten Stelle (5) des Verbindungselements und ein von dem Griffelement (7) oder dem Element abgewandtes Ende des zweiten Profils (8') mit einer zweiten Stelle (5') des Verbindungselements derart gekoppelt sind, dass der erste Drehpunkt (7'), der zweite Drehpunkt (7"), die erste Stelle (5) und die zweite Stelle (5') ein Viergelenk ausbilden.

2. Aufnahmevorrichtung (1) nach Anspruch 1, **dadurch gekennzeichnet, dass** das Viergelenk mit der zweiten Platte und mit der dritten Platte in operativer Verbindung steht, so dass die erste, zweite und dritte Platte in eine Vielzahl von Positionen von einer Sitzanordnung bis zu einer Liegeanordnung einstellbar sind.

3. Aufnahmevorrichtung (1) nach Anspruch 1 oder 2, **dadurch gekennzeichnet, dass** die Feststellvorrichtung in diskreten Einrastschritten oder kontinuierlich betätigbar ist, wobei die Feststellvorrichtung zumindest ein Einrastelement aufweist, das mit einem an dem Profil (8) angeordneten korrespondierenden Einrastelement in Eingriff steht.

4. Aufnahmevorrichtung (1) nach einem der vorhergehenden Ansprüche, **dadurch gekennzeichnet, dass** die erste, die zweite und die dritte Platte trapezförmig oder näherungsweise trapezförmig sind und voneinander unabhängige geometrische Formen haben.

5. Aufnahmevorrichtung (1) nach einem der vorhergehenden Ansprüche, **dadurch gekennzeichnet, dass** das Verbindungselement ein Material aufweist, das geeignet ist, Zug- und/oder Druckkräfte aufzunehmen und dass vorzugsweise das Verbindungselement ein Rand (4) eines Seitenflügels (6) ist.

6. Aufnahmevorrichtung (1) nach einem der vorhergehenden Ansprüche, **dadurch gekennzeichnet, dass** das Verbindungselement ein Seil, eine Litze, ein Flachprofil, ein Stab, insbesondere ein flexibler Stab, oder ein Schlauchmaterial ist.

7. Aufnahmevorrichtung (1) nach einem der vorhergehenden Ansprüche, **dadurch gekennzeichnet, dass** die erste Platte ein Sitzflächenabschnitt (9'), die zweite Platte ein Rückenabschnitt (9) ist und die dritte Platte eine Bein- und Fußablage (9") ganz oder zumindest teilweise bildet, wobei vorzugsweise die dritte Platte mit einer vierten Platte, insbesondere mit einer vierten abgewinkelten Platte, die Bein- und Fußablage (9") bildet.

8. Aufnahmevorrichtung (1) nach Anspruch 5 oder 7 wenn abhängig von Anspruch 5, **dadurch gekennzeichnet, dass** der Seitenflügel (6) zumindest entlang dem Sitzflächenabschnitt (9'), vorzugsweise entlang zumindest eines Abschnitts des Rückenabschnitts (9) und/oder entlang zumindest eines Abschnitts der Bein- und Fußablage (9") verläuft.

9. Aufnahmevorrichtung (1) nach einem der vorhergehenden Ansprüche, **dadurch gekennzeichnet, dass** die Aufnahmevorrichtung (1) Rastmittel (60) aufweist, die geeignet sind, mit an einem zugeordneten Kinderwagengestell (20) vorliegenden korrespondierenden Rastmitteln (65) in sichernden Eingriff auf dem Kinderwagengestell (20) gebracht zu werden.

10. Aufnahmevorrichtung (1) nach Anspruch 9, **dadurch gekennzeichnet, dass** die am Kinderwagengestell (20) angeordneten Rastmittel (65) durch wenigstens ein in Fahrtrichtung angeordnetes V-förmiges Element gebildet sind, dass mit den gegengleichen Rastmitteln (60) selbst zentrierend zusammenwirkt.

11. Modulares Kinderwagen-Sitz- und -Liegesystem, das geeignet ist, auf einem Kinderwagengestell (20,50) angeordnet zu werden, umfassend
- eine Aufnahmevorrichtung (1) nach einem der Ansprüche 1 bis 10
- zumindest eines von einer Kindersitzauflage (30,55) und einer Kinderliegeauflage, **dadurch gekennzeichnet, dass** die Kindersitzauflage (30,55) und/oder die Kinderliegeauflage geeignet sind, in der Aufnahmevorrichtung (1) aufgenommen zu werden.

12. Modulares Kinderwagen-Sitz- und -Liegesystem nach Anspruch 11, **dadurch gekennzeichnet, dass** die Kindersitzauflage (30) eine Sitzflächenplatte (31) aufweist, die mit einem Rückenlehnenelement (32) drehgelenkig verbunden ist, wobei das Rückenlehnenelement (32) an einem von dem drehgelenkig verbundenen Ende abgewandten Ende einen als Umgriff (33) ausgebildeten Rand aufweist, der geeignet ist, den Rückenabschnitt (9) der Aufnahmevorrichtung (1) zu umgreifen.

13. Modulares Kinderwagen-Sitz- und -Liegesystem nach Anspruch 11, **dadurch gekennzeichnet, dass** die Kinderliegeauflage eine Säuglingstragetasche (40) ist.

14. Modulares Kinderwagen-Sitz- und -Liegesystem nach einem der Ansprüche 11 bis 13, **dadurch gekennzeichnet, dass** die Kindersitzauflage (30) und/oder die Kinderliegeauflage zumindest eine Festlegungsvorrichtung aufweist, die geeignet ist, mit einer korrespondierenden, an der Aufnahmevorrichtung (1) angeordneten Festlegungsvorrichtung in sichernden Eingriff gebracht zu werden.

15. Modulares Kinderwagen-Sitz- und -Liegesystem nach einem der Ansprüche 11 bis 14, **dadurch gekennzeichnet, dass** das Kinderwagengestell (30,50) ein Sportkinderwagengestell, ein Klappkinderwagengestell, Reisekinderwagengestell oder ein sonstiges geeignetes Kinderwagengestell ist, das Rastmittel (65) aufweist, die geeignet sind, mit an der Aufnahmevorrichtung (1) vorliegenden komplementären Rastmitteln (60) vorzugsweise selbst zentrierend in Eingriff gebracht zu werden.

## Claims

1. A receiving device (1) which is suitable for being arranged detachably on a pushchair underframe (20, 50) and receiving a child seat support (30) and/or a recliner support, including
- two gripping elements (7) or elements which are arranged on opposite sides of a first plate,
- a second and a third plate which are connected in pivotal articulation to two further opposite sides of the first plate,
- a connecting element having a first end and a second end, wherein the first end is coupled to the second plate and the second end is coupled to the third plate,
- a first profiled section (8) which is pivotally articulated to a first pivot point (7') on the gripping element (7) or the element,
- a second profiled section (8') which is pivotally articulated to a second pivot point (7") on the gripping element (7) or the element,
wherein at least one of the first and second profiled sections (8, 8') is coupled to at least one of the gripping elements (7) or elements by a fixing device for detachable positioning on the gripping element (7) or the element,
**characterised in that** an end of the first profiled section (8) that is remote from the gripping element (7) or the element is coupled to a first point (5) on the connecting element and an end of the second profiled section (8') that is remote from the gripping element (7) or the element is coupled to a second point (5') on the connecting element such that the first pivot point (7'), the second pivot point (7"), the first point (5) and the second point (5') form a quadruple articulation.

2. A receiving device (1) according to Claim 1, **characterised in that** the quadruple articulation is in operational connection with the second plate and the third plate such that the first, second and third plate can be put in a plurality of positions, from a sitting arrangement to a reclining arrangement.

3. A receiving device (1) according to Claim 1 or 2, **characterised in that** the fixing device may be actuated in discrete latching steps or continuously, wherein the fixing device has at least one latch-in element which is in engagement with a corresponding latch-in element arranged on the profiled section (8).

4. A receiving device (1) according to one of the preceding claims, **characterised in that** the first, second and third plate are trapezoidal or approximately trapezoidal and have mutually independent geometric shapes.

5. A receiving device (1) according to one of the preceding claims, **characterised in that** the connecting element includes a material which is suitable for taking up tensile and/or pressure forces, and **in that** the connecting element is preferably an edge (4) of a side panel (6).

6. A receiving device (1) according to one of the preceding claims, **characterised in that** the connecting element is a cable, a cord, a flat profiled section, a rod, in particular a flexible rod, or a hose material.

7. A receiving device (1) according to one of the preceding claims, **characterised in that** the first plate is a seat surface portion (9'), the second plate is a back portion (9) and the third plate entirely or in part forms a leg- and footrest (9"), wherein preferably the third plate forms with a fourth plate, in particular a fourth angled plate, the leg- and footrest (9").

8. A receiving device (1) according to Claim 5 or 7 when dependent from Claim 5, **characterised in that** the side panel (6) extends at least along the seat surface portion (9'), preferably along at least a portion of the back portion (9) and/or along at least a portion of the leg- and footrest (9").

9. A receiving device (1) according to one of the preceding claims, **characterised in that** the receiving device (1) has latching means (60) which are suitable, in connection with corresponding latching means (65) provided on an associated pushchair underframe (20),for coming into securing engagement on the pushchair underframe (20).

10. A receiving device (1) according to Claim 9, **characterised in that** the latching means (65) arranged on the pushchair underframe (20) are formed by at least one V-shaped element arranged in the direction of travel, that cooperates with the matching latching means (60) in self-centring manner.

11. A modular pushchair seat and recliner system, which is suitable for being arranged on a pushchair underframe (20, 50) and includes:
- a receiving device (1) according to one of Claims 1 to 10,
- at least one of a child seat support (30, 55) and a child recliner support, **characterised in that** the child seat support (30, 55) and/or the child recliner support are suitable for being received in the receiving device (1).

12. A modular pushchair seat and recliner system according to Claim 11, **characterised in that** the child seat support (30) has a seat surface plate (31) which is connected in pivotal articulation to a backrest element (32), wherein the backrest element (32) has, at its end remote from the end that is connected in pivotal articulation, an edge that is constructed as a wrap-around (33) and is suitable for engaging around the back portion (9) of the receiving device (1).

13. A modular pushchair seat and recliner system according to Claim 11, **characterised in that** the child recliner support is a baby's carrycot (40).

14. A modular pushchair seat and recliner system according to one of Claims 11 to 13, **characterised in that** the child seat support (30) and/or the child recliner support has at least one securing device which is suitable for being brought into securing engagement with a corresponding securing device arranged on the receiving device (1).

15. A modular pushchair seat and recliner system according to one of Claims 11 to 14, **characterised in that** the pushchair underframe (30, 50) is a sports pushchair underframe, a folding pushchair underframe, a travel pushchair underframe or another suitable pushchair underframe which has latching means (65) that are suitable for being brought into engagement with complementary latching means (60) on the receiving device (1), preferably in self-centring manner.

## Revendications

1. Dispositif de réception (1) apte à être disposé de manière amovible sur un châssis de poussette (20,50) et à recevoir une surface d'appui pour siège d'enfant (30) et/ou une surface d'appui pour lit, comprenant
- deux éléments formant poignées (7) ou éléments qui sont disposés sur des côtés opposés d'une première plaque,
- une deuxième et une troisième plaques, qui sont reliées de manière articulée à deux autres côtés opposés de la première plaque,
- une élément de liaison ayant une première extrémité et une deuxième extrémité, la première extrémité étant couplée à la deuxième plaque et la deuxième extrémité à la troisième plaque,
- un premier profilé (8), qui est articulé de manière rotative à un premier point de rotation (7') de l'élément formant poignée (7) ou de l'élément,
- un deuxième profilé (8') qui est articulé de manière rotative à un deuxième point de rotation (7") de l'élément formant poignée (7) ou de l'élément,
dans lequel au moins l'un des premier et deuxième profilés (8,8') est couplé à au moins un des éléments formant poignée (7) ou des éléments à l'aide d'un dispositif de fixation en vue d'un positionnement amovible sur l'élément formant poignée (7) ou l'élément,
**caractérisé en ce qu'**une extrémité du premier profil (8) opposée à l'élément formant poignée (7) ou à l'élément est couplée à un premier endroit (5) de l'élément de liaison et une extrémité du deuxième profil (8') opposée à l'élément formant poignée (7) ou à l'élément est couplée à un deuxième endroit (5') de l'élément de liaison, de telle sorte que le premier point de rotation (7'), le deuxième point de rotation (7"), le premier endroit (5) et le deuxième endroit (5') forment une articulation à quatre membres.

2. Dispositif de réception (1) selon la revendication 1, **caractérisé en ce que** l'articulation à quatre membres est en liaison opérationnelle avec la deuxième plaque et la troisième plaque de manière à ce que la première, la deuxième et la troisième plaques soient réglables dans une multitude de positions allant d'une conformation de siège à une conformation de lit.

3. Dispositif de réception (1) selon la revendication 1 ou 2, **caractérisé en ce que** le dispositif de fixation est actionnable avec des crans d'encliquetage ou de manière continue, le dispositif de fixation présentant au moins un élément d'encliquetage qui est en prise avec un élément d'encliquetage correspondant disposé sur le profil (8).

4. Dispositif de réception (1) selon l'une des revendications précédentes, **caractérisé en ce que** la première, la deuxième et la troisième plaque sont de forme trapézoïdale ou sensiblement trapézoïdale et ont des formes géométriques indépendantes les unes des autres.

5. Dispositif de réception (1) selon l'une des revendications précédentes, **caractérisé en ce que** l'élément de liaison est constitué d'un matériau qui est apte à subir des forces de traction et/ou de pression et **en ce que** l'élément de liaison est de préférence un bord (4) d'une ailette latérale (6).

6. Dispositif de réception (1) selon l'une quelconque des revendications précédentes, **caractérisé en ce que** l'élément de liaison est une corde, un cordon, un profilé plat, une barre, en particulier une barre flexible ou un matériau formant tuyau.

7. Dispositif de réception (1) selon l'une des revendications précédentes, **caractérisé en ce que** la première plaque est une pièce formant surface d'assise (9'), la deuxième plaque une pièce formant dossier (9) et la troisième plaque forme totalement ou au moins en partie une surface de repos pour les jambes ou les pieds (9"), la troisième plaque formant de préférence avec une quatrième plaque, en particulier avec une quatrième plaque coudée, la surface de repos pour les jambes ou les pieds (9").

8. Dispositif de réception (1) selon la revendication 5 ou selon la revendication 7, lorsque celle-ci est dépendante de la revendication 5, **caractérisé en ce que** l'ailette latérale (6) s'étend au moins le long de la pièce formant surface d'assise (9'), de préférence le long d'au moins une partie du dossier (9) et/ou le long d'au moins une partie de la surface de repos pour les jambes ou les pieds (9").

9. Dispositif de réception (1) selon l'une des revendications précédentes, **caractérisé en ce que** le dispositif de réception (1) présente des moyens d'encliquetage, qui sont aptes à être mis fermement en prise, sur un châssis de poussette associé (20), avec des moyens d'encliquetage (65) correspondants présents sur le châssis de poussette (20).

10. Dispositif de réception (1) selon la revendication 9, **caractérisé en ce que** les moyens d'encliquetage (65) disposés sur le châssis de poussette (20) sont formés par un élément en forme de V disposé dans le sens du déplacement et qui coopère avec les moyens d'encliquetage correspondants (60) en réalisant un auto-centrage.

11. Système modulaire pour siège et lit de poussette apte à être disposé sur un châssis de poussette (20,50), comprenant
- un dispositif de réception (1) selon l'une des revendications 1 à 10,
- au moins un élément choisi parmi une surface d'appui pour siège d'enfant (30,55) et une surface d'appui pour lit d'enfant, **caractérisé en ce que** la surface d'appui pour siège d'enfant (30,55) et/ou la surface d'appui pour lit d'enfant sont aptes à être reçues dans le dispositif de réception (1).

12. Système modulaire pour siège et lit de poussette selon la revendication 11, **caractérisé en ce que** la surface d'appui pour siège d'enfant (30) présente une plaque formant surface d'assise (31) qui est reliée de manière articulée à un élément formant dossier (32), l'élément formant dossier (32) présentant un bord formant une poignée périphérique (33) à une extrémité opposée à l'extrémité reliée de manière articulée, ce bord étant apte à former une poignée périphérique autour de la pièce formant dossier (9) du dispositif de réception (1).

13. Système modulaire pour siège et lit de poussette selon la revendication 11, **caractérisé en ce que** la surface d'appui de lit d'enfant est une nacelle de transport de nourrisson (40).

14. Système modulaire pour siège ou lit de poussette selon l'une quelconque des revendications 11 à 13, **caractérisé en ce que** la surface d'appui de siège d'enfant (30) et/ou la surface d'appui de lit d'enfant présente au moins un dispositif de fixation, qui est apte à être mis fermement en prise avec un dispositif de fixation correspondant disposé sur le dispositif de réception (1).

15. Système modulaire pour siège ou lit de poussette selon l'une des revendications 11 à 14, **caractérisé en ce que** le châssis de poussette (30,50) est un châssis de poussette sportive, un châssis de poussette rabattable, un châssis de poussette de voyage ou un châssis de poussette ordinaire approprié présentant des moyens d'encliquetage (65) aptes à être mis en prise avec des moyens d'encliquetage (60) complémentaires se trouvant sur le dispositif de réception (1), de préférence en réalisant un auto-centrage.
